(19) Europäisches Patentamt / European Patent Office / Office européen des brevets

(11) **EP 2 667 177 B1**

(12) **EUROPÄISCHE PATENTSCHRIFT**

(45) Veröffentlichungstag und Bekanntmachung des Hinweises auf die Patenterteilung:
**31.07.2019  Patentblatt 2019/31**

(51) Int Cl.:
***G01N 15/08*** *(2006.01)*

(21) Anmeldenummer: **13168322.9**

(22) Anmeldetag: **17.05.2013**

(54) **Vorrichtung und Verfahren zur Bestimmung der Permeationsrate von Barriere- und Ultrabarriereelementen**

Device and method for determining the permeation rate of barrier elements and ultrabarrier elements

Dispositif et procédé de détermination du taux de perméation d'éléments barrière et ultra-barrière

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2012  DE 102012010269**

(43) Veröffentlichungstag der Anmeldung:
**27.11.2013  Patentblatt 2013/48**

(73) Patentinhaber: **Fraunhofer-Gesellschaft zur Förderung der angewandten Forschung e.V.
80686 München (DE)**

(72) Erfinder:
• **Beese, Harald**
  **01705 Freital (DE)**
• **Grählert, Wulf**
  **01277 Dresden (DE)**
• **Kaskel, Stefan**
  **01159 Dresden (DE)**

(74) Vertreter: **Pfenning, Meinig & Partner mbB
Patent- und Rechtsanwälte
An der Frauenkirche 20
01067 Dresden (DE)**

(56) Entgegenhaltungen:
WO-A2-2008/145115       WO-A2-2012/033649
US-A- 5 390 539          US-A- 5 581 017
US-A1- 2005 092 068      US-A1- 2010 201 983

**Beschreibung**

Die Erfindung betrifft eine Vorrichtung und ein Verfahren zur Bestimmung der Permeationsrate von Barriere- und Ultrabarriereelementen nach einem isostatischen Permeationsmessverfahren.

Für verschiedenste Anwendungen ist es von großer Bedeutung, die Permeabilität von Werkstoffen für bestimmte Permeate ermitteln zu können. Die Bestimmung der Permeationsrate ist insbesondere in der Entwicklungsphase von polymeren Werkstoffen und darauf ausgebildeten Barriereschichten, für Schichtsysteme und auch für die Qualitätskontrolle im Produktionsprozess gewünscht. Dabei handelt es sich um Permeationssperren bildende Elemente, insbesondere Folien, Membrane, Platten, rohr- und ringförmige Elemente, oder Bauteile, die auch aus bzw. mit Verbundwerkstoffen gebildet sein können. Beispielsweise bestimmt die Permeationsrate solcher Werkstoffe, die zur Verkapselung verwendet werden, im hohen Maße die Funktion und die Qualität von OLED-, LCD-Displays, Dünnschichtsolarzellen, organischen Solarzellen und anderen elektronischen Bauelementen sowie auch die Haltbarkeit von Lebensmitteln und pharmazeutischen Produkten. Die Forderung nach Werkstoffen mit geringsten Permeationsraten, insbesondere für O2 und H2O, durch den Einsatz neuer Materialien mit Ultrabarriereeigenschaften zu erfüllen, erfordert gleichzeitig den gesicherten quantitativen Nachweis geringster Permeationsraten.

Die Methoden zur Bestimmung der Permeationsrate von Ultrabarrierematerialien erfordern aufgrund sehr geringer Permeatkonzentrationen ein hochempfindliches Messsystem. Konventionelle Messmethoden, wie beispielsweise die aus der US 5390539 bekannte Gasdetektion mit nichtdispersiven Infrarotsensoren oder Methoden mit coulometrischen Feuchtesensoren, erreichen nicht die gewünschte Messempfindlichkeit, um geringste Permeationsraten im Bereich von < 10-4 g[H2O] m-2 d-1 bestimmen zu können.

Bislang sind isostatische Messmethoden bekannt, bei denen die Permeationsrate von Barrierematerialien mit einem Permeaten enthaltenden Trägergas ermittelt wird. Dabei stellt sich ein konstanter Permeatenmassenstrom bzw. eine Gleichgewichtspermeatkonzentration ein. Der konstante Permeatenmassenstrom ist dann ein Maß für die Gasdurchlässigkeit bzw. die Permeationsrate des Barrierematerials. Die Nachweisgrenze liegt dabei jedoch selbst mit Laser basierten Detektionssystemen und sehr kleinen Trägergasflüssen von 3 sccm an der Nachweisgrenze. Eine weitere Reduzierung des Trägergasflusses bedeutet jedoch, dass bei Vorliegen sehr geringer Permeatkonzentrationen zudem eine noch längere Einstellzeit bis zum Gleichgewichtszustand notwendig ist und führt weiterhin zu wesentlich größeren Unsicherheiten bei der Bestimmung des Permeatenmassenstroms, was sich wiederum unmittelbar im Fehler der Bestimmung der Permeationsrate äußert.

Aus der WO 2008/145115 A2 sind eine Vorrichtung und ein Verfahren zur Permeationsmessung eines eine Permeationssperre bildenden Elements bekannt, wobei bei einem durch ein Barriere bildendes Element permeierter Permeat, eine an einem Detektor messbare Schwächung der Intensität eines Laserstrahls bewirkt und in Abhängigkeit der Zeit die Permeationsrate bestimmt wird. Der Laserstrahl wird dabei durch eine Detektionskammer geführt, die kontinuierlich von einem Gas durchströmt wird, um den permeierten Permeaten abzuführen. Hierbei tritt jedoch wiederum die Problematik auf, dass sehr geringe Permeationsraten, wie beispielsweise von Ultrabarrierematerialen, aufgrund der geringen Messempfindlichkeit nicht oder nur unzureichend nachgewiesen werden können.

Weiterhin ist bereits aus der Arbeit von Bernd Schirmer mit dem Titel: "Hochaufgelöste Wasserdampfdetektion mittels Diodenlaser-Absorptionsspektroskopie" (2001, Stuttgart, Erlangen-Nürnberg), ein Detektionssystem bekannt, bei der die Permeationsrate anhand eines Wasserdampfkonzentrationgradienten bestimmt werden kann. Diese Methode eignet sich jedoch nur zur Messung von sehr hohen Permeationsraten.

So sind aus WO 2012/0336499 A2 ein System und ein Verfahren zur Bestimmung der Permeationsrate an Barrierefilmen unter Nutzung der Vakuumanreicherung beschrieben.

US 2005/0092068 A1 betrifft ein Verfahren und eine Vorrichtung zur Messung der Gastransmissionsraten von verformbaren oder spröden Materialien.

Aus US 2010/0201983 A1 ist ein Verfahren zur Defekterkennung beschrieben.

Ein Inegrietätstest für poröse Strukturen mittels akkustischer Emission ist in US 5,581,017 A offenbart.

Es ist daher Aufgabe der Erfindung, eine Vorrichtung und ein Verfahren mit ausreichender Empfindlichkeit zur Bestimmung der Permeationsrate von Barriereelementen bereitzustellen.

Erfindungsgemäß wird diese Aufgabe mit einer Vorrichtung, die die Merkmale des Anspruchs 1 aufweist und einem Verfahren nach Anspruch 11, gelöst.

Mit in untergeordneten Ansprüchen bezeichneten Merkmalen können vorteilhafte Ausgestaltungen und Weiterbildungen der Erfindung erreicht werden.

Die erfinderische Lösung der Aufgabe berücksichtigt, dass der konvektive Stofftransport eines zu permeierenden Gases von einem Testgasraum, der auch als Prüfgasraum, Feedseite oder Dampfraum bezeichnet werden kann, durch ein Barriereelement, in einer nachfolgend angeordneten Messkammer mit Hohlleitelement und Permeatensenke, durch einen diffusionskontrollierten Stofftransport ersetzt wird. Das bedeutet, dass ein Permeat (Stoff der von dem Testgasraum durch ein Barriereelement permeiert ist) in einer inerten Gasatmosphäre entlang einer Diffusionsstrecke bekannter Länge, strömungsfrei bis zu einer Permeatensenke diffundiert und dort absorbiert oder anderweitig abgeführt wird. Die Permeatensenke gewährleistet dabei eine konstante und niedrige Konzentration des Permeaten. Durch die Permeatensenke bildet sich ein Konzentrationsgradient über die Diffusionsstrecke aus. Dabei stellt der Konzentrationsgradient die Triebkraft und die Ursache der Diffusion dar.

Nach dem Ersten Fick'schen Gesetz (1),

$$(1) \qquad J = -D * \Delta c/\Delta x$$

ist der Konzentrationsgradient ($\Delta c/\Delta x$) des Permeaten entgegen der Diffusionsrichtung proportional zur Teilchenstromdichte J (Fließgeschwindigkeit des Permeaten durch die Diffusionsstrecke). Dabei ist die Proportionalitätskonstante D der Diffusionskoeffizient des Permeaten.

Bei konstanter Permeation des zu permeierenden Gases durch das Barriereelement, ist der Permeatenmassenstrom $M_B$ durch das Barriereelement gleich dem Permeatenmassenstrom $M_G$ durch die Gasatmosphäre der Diffusionsstrecke. In diesem Fall stellt sich ein konstantes Konzentrationsprofil ein.

Im Allgemeinen beschreibt der Massenstrom M eine Masse die sich in einer Zeiteinheit durch eine Querschnittsfläche A bewegt.

Für einen festen Körper, wie beispielsweise bei einem Barriereelement, ergibt sich der Permeatenmassenstrom $M_B$ dann entsprechend Gleichung (2) aus dem Produkt der Permeationsrate $PR_B$ des festen Körpers und der permeierbaren Fläche $A_B$ des festen Körpers.

$$(2) \qquad M_B = PR_B * A_B$$

Bei Betrachtung der sich danach anschließenden, für den Permeaten diffundierbaren Gasatmosphäre der Diffusionsstrecke, ergibt sich der Permeatenmassenstrom $M_G$ entsprechend Gleichung (3) aus der Teilchenstromdichte J (Teilchen die in einer Zeiteinheit durch eine senkrecht zum Diffusionsstrom liegende Querschnittsfläche diffundieren) und der jeweiligen dazugehörigen diffundierbaren Querschnittsfläche $A_G$ der Diffusionsstrecke zu

$$(3) \qquad M_G = J * A_G.$$

Im Fall eines konstanten Permeatenmassenstroms M im gesamten System ($M_B = M_G$) gilt dann,

$$(4) \qquad PR_B * A_B = J * A_G$$

$$(5) \qquad PR_B * A_B = -D * \Delta c/\Delta x * A_G$$

$$(6) \qquad PR_B = -D * \Delta c/\Delta x * A_G/A_B,$$

so dass dann anhand der Kenntnis des sich in der Gasatmosphäre der Diffusionsstrecke ausbildenden Konzentrationsgradientens $\Delta c/\Delta x$, die Permeationsrate $PR_B$ des Festkörpers (Barriereelement) mit der Gleichung (6) errechnet werden kann. Dabei gilt, dass die Änderung der Konzentration des Permeaten über das Barriereelement, um mindestens einen Faktor 100 größer ist, als die Änderung der Permeatenkonzentration über der Diffusionstrecke, um die Permeation durch das Barriereelement nicht durch die Messung zu beeinflussen.

Zur Messung der Permeatenkonzentration wird eine Messmethode verwendet, bei der die Messung nicht-invasiv erfolgt. Dabei wird die Permeatenkonzentration so gemessen, dass der Permeat nicht verbraucht und die Permeatenkonzentration nicht beeinflusst wird. Aus diesem Grund sollte ein optischer Sensor/Detektor verwendet werden.

Eine entsprechende erfindungsgemäße Vorrichtung zur Bestimmung der Permeationsrate eines Barriereelements oder eines Ultrabarriereelements weist eine Messkammer auf, die durch ein Barriereelement von einem Testgasraum getrennt ist. In dem Testgasraum ist ein zu permeierendes Gas enthalten und/oder wird kontinuierlich zu- und abgeführt. Dabei wird stets ein konstanter Partialdruck des jeweiligen zu permeierenden Gases eingehalten.

Das Barriereelement bildet zu der Messkammer zumindest bereichsweise eine Abtrennung mit einer bekannten permeierbaren Querschnittsfläche AB. An einer solchen Messkammer ist mindestens ein Hohlleitelement mit einer Permeatensenke so angeordnet oder daran ausgebildet, dass ausgehend von dem Barriereelement durch das Hohlleitelement bis an die Permeatensenke, eine für einen Permeaten diffundierbare, strömungsfreie Diffusionsstrecke gebildet ist. Das Hohlleitelement kann durch ein kanal- oder rohrähnliches Element gebildet sein und kann eine Heizeinrichtung aufweisen. Das Ende eines Hohlleitelements mündet in eine Permeatensenke. An der Permeatensenke kann Permeat kontinuierlich durch Ad- und/oder Absorber abgeführt werden. Beispielsweise können bei der Verwendung von Wasserdampfpermeaten Zeolithe zur Abführung des Wasserdampfs verwendet werden. Weiterhin kann eine Permeatensenke eingesetzt werden, die zum Beispiel als T-Stück mit großem Querschnitt ausgeführt ist und kontinuierlich mit einem trockenen, keinen Permeaten enthaltendes Gas gespült wird.

Zumindest die Messkammer und das Hohlleitelement sind gegenüber der Umgebungsatmosphäre druck- und fluiddicht abgeschlossen, so dass gewährleistet ist, dass zur Ausbildung eines Gleichgewichtsmassenstroms bzw. zur Ausbildung eines konstanten Konzentrationsgradienten des Permeaten, innerhalb der Diffusionsstrecke eine strömungsfreie Gasatmosphäre eingestellt ist und Permeat allein in Folge von Diffusion durch die Diffusionsstrecke zur Permeatensenke gelangt. Insbesondere sollen keine Leckstellen an den Verbindungsstellen einzelner Elemente zum Eindringen von Feuchte führen, da die Ausbildung des Konzentrationsgradienten sonst störend überlagert werden könnte.

Die freie innere Querschnittsfläche $A_G$ eines Hohlleitelements sollte an mindestens einer Position kleiner oder größer als die Querschnittsfläche $A_B$ sein. Dabei ist eine verkleinerte freie innere Querschnittsfläche $A_G$ bevorzugt.

Für den oben genannten Fall eines konstanten Permeatenmassenstroms im gesamten System ($M_B = M_G$), bildet sich entlang der Diffusionsstrecke, ausgehend von dem Barriereelement in Richtung der Permeatensenke ein Konzentrationsgradient des Permeaten aus.

Ein Hohlleitelement weist an mindestens einer Position entlang der Diffusionsstrecke, eine gegenüber der permeierbaren Querschnittsfläche $A_B$ des Barriereelements veränderte freie innere Querschnittsfläche $A_G$ auf. Die Veränderung des inneren Querschnitts entlang der Diffusionsstrecke kann dabei sprunghaft und/oder kontinuierlich, beispielsweise durch eine konische Formgebung oder durch eine abschnittsweise Verjüngung erfolgen.

Weiterhin kann ein Hohlleitelement aus Edelstahl gebildet sein und eine Oberflächenbehandlung der Innenwände, wie beispielsweise eine elektropolierte Oberfläche, aufweisen. Die innere freie Querschnittsfläche $A_G$ eines Hohlleitelements kann auch verschiedene innere Querschnittsprofile (rund, mehreckig oder irregulär) mit bekannter Fläche $A_G$ aufweisen.

In einer vorteilhaften Ausführungsform eines Hohlleitelements, kann die Veränderung der freien Querschnittsfläche $A_G$ entlang der Diffusionsstrecke durch die Variation der Öffnung einer Blende, wie beispielsweise bei einer Irisblende, erreicht werden. Mindestens eine solche Blende kann innerhalb eines Hohlleitelements an mindestens einer Position entlang der Diffusionsstrecke angeordnet sein. Dabei kann eine solche Blende so ausgebildet sein, dass die Diffusionsstrecke druck- und fluiddicht abgeschlossen werden kann. Zur Verringerung des Risikos von Leckraten, sollten alle Verbindungsstellen der Messkammer, der Hohlleitelemente und des Testgasraums druck- und fluiddicht, beispielsweise durch Löten oder Schweißen, gefügt sein.

Weiterhin kann ein Hohlleitelement eine mäanderförmige Verlaufsstruktur aufweisen, so dass eine Verlängerung der Diffusionsstrecke erreicht werden kann. Dabei kann die Länge der Diffusionsstrecke größer als der Abstand zwischen der Messkammer und der Permeatensenke sein. Dadurch kann ein kompakterer Aufbau sowie eine gute Zugänglichkeit zur Messung der Permeatenkonzentration realisiert werden.

Innerhalb der Permeatensenke kann ein Spülgas strömen, das eine konstant gehaltene Strömungsgeschwindigkeit aufweisen sollte. Dabei muss die Strömungsgeschwindigkeit so eingestellt werden, dass kein Unterdruck ("Wasserstrahlpumpeneffekt") oder Turbulenzen in der Messkammer und dem Hohlleitelement entstehen können. Um eine Störung des Konzentrationsgradienten zu mindern, kann an der Mündung des Hohlleitelements (an der Verbindungsstelle zur Permeatensenke) eine für den Permeaten durchlässige Membran, wie beispielsweise ein poröses Material oder ein Filter, angeordnet sein.

Durch Fensterelemente in einem Hohlleitelement und/oder durch ein Hohlleitelement, das zumindest bereichsweise optisch transparent ist, kann Strahlung mindestens einer Strahlungsquelle, die Strahlung mit mindestens einer Wellenlänge, die einer Absorptionswellenlänge des jeweiligen Permeaten entspricht, zumindest aber in einem eng begrenzten Wellenlängenbereich um eine solche Absorptionswellenlänge eines Permeaten liegt, emittiert werden.

Die Strahlung muss durch ein Volumenelement d der Diffusionsstrecke mit bekannter Länge, an einer Position xi entlang der Diffusionsstrecke, mit einem bekanntem Abstand zum Barriereelement oder zur Permeatensenke geführt und auf mindestens einen optischen Detektor, der zur Bestimmung einer Intensität mindestens einer jeweiligen Absorptionswellenlänge des Permeaten geeignet ist, gerichtet werden. Dabei entspricht der Abstand der Position xi zum Barriereelement oder zur Permeatensenke, der absoluten Weglänge der Diffusionsstrecke. Die Strahlung kann senkrecht zur oder entlang durch ein Volumenelement d der Diffusionsstrecke geführt werden.

In einer vorteilhaften Ausführung eines Hohlleitelements können zur Strahlführung der Strahlung innerhalb des Hohlleitelements optische Elemente wie Prismen, Linsen oder Fasern eingesetzt werden. Weiterhin können die Strahlungsquelle und der Detektor innerhalb eines Hohlleitelements angeordnet sein, wobei die Innenwand eines Hohlleitelements als reflektierendes Element genutzt werden kann.

Die Positionierung und die Führung der Strahlung entlang der Diffusionsstrecke kann beispielsweise durch Verschieben der Strahlungsquelle und des Detektors auf einer Lineareinheit oder durch fasergekoppelte Optiken und einen optischen Multiplexer verändert werden.

In einer weiteren Ausführungsform der Vorrichtung kann die Messkammer in Verbindung mit einem Hohlleitelement und einer Permeatensenke durch eine Art Wechslersystem ausgetauscht werden oder manuell, beispielsweise nach einer Konditionierungszeit, aus einem Klimaschrank in die Vorrichtung eingesetzt werden. Dazu können die Messkammer und/oder das Hohlleitelement mit Ventilen zur druck- und fluiddichten Absperrung gegenüber der Umgebungsatmosphäre versehen sein. Eine Messkammer in Verbindung mit dem Hohlleitelement und der Permeatensenke kann somit als autonome Einheit ausgeführt werden, so dass die Vorrichtung mit mehreren zu messenden Proben (mehrere Messkammern mit Hohlleitelement und Permeatensenke) bestückt werden kann. Dabei kann die Messung mehrerer Proben mit einer Strahlungsquelle und einem Detektor zeitgleich erfolgen.

In einer besonderen Ausführungsform der Vorrichtung werden mindestens zwei Hohlleitelemente, mit voneinander verschiedenen freien inneren Querschnittsflächen AG, parallel zwischen der Messkammer und der Permeatensenke angeordnet. Dabei können die inneren freien Querschnittsflächen AG der Hohlleitelemente von der Querschnittsfläche AB verschieden sein. Zudem können die jeweiligen Hohlleitelemente Ventile oder Blenden aufweisen, die einer druck- und fluiddichten Absperrung der Diffusionsstrecke dienen.

In einem Beispiel, das nicht Teil der Erfindung ist, sind im Anschluss an eine erste Messkammer, ein zweites Barriereelement mit bekannter Permeabilität/ Permeationsrate und eine zweite Messkammer im Anschluss an das zweite Barriereelement angeordnet. In dieser Ausführungsform wird die zweite Anordnung aus Barriere- und Messkammer als Ersatz für die Diffusionsstrecke der ersten Messkammer verwendet. Der bekannte Permeations/Diffusionswiderstand des zweiten Barriereelements kann somit zur Bestimmung der Permeationsrate des ersten Barriereelements verwendet werden. Beispielsweise kann die Wasserdampfdurchlässigkeit WDD2 des unbekannten Barriereelements berechnet werden, indem zuerst der Massenstrom m'1 durch das bekannte Barriereelement ermittelt wird. Dieser berechnet sich zu:

$$(7) \qquad m'_1 = WDD_1 * \Delta c_1 * A_1 / d_1$$

mit $WDD_1$ (Wasserdampfdurchlässigkeit des bekannten Barriereelements), $\Delta c_1$ (Konzentrationsänderung über das bekannte Barriereelement), $A_1$ (des bekannten Barriereelements), d1 (Dicke des bekannten Barriereelements).

Unter der Voraussetzung $\Delta c1$ (Konzentrationsänderung über das bekannte Barriereelement) << $\Delta c2$ (Konzentrationsänderung über das unbekannte zu messenden Barriereelement) kann die Wasserdampfdurchlässigkeit WDD2 durch das unbekannte Barriereelement, vereinfacht durch folgende Gleichung bestimmt werden:

$$(8) \qquad WDD2 = m'1 * A2 \ \ (wenn\ gilt\ m'1 = m'2)$$

Alternativ kann eine Korrekturrechnung zur Beseitigung des durch die Messung verursachten geringeren Konzentrationsgradienten über die zu messende unbekannte Probe nach untenstehender Gleichung erfolgen:

$$(9) \qquad WDD2 = WDD1 * \Delta c1,2 / \Delta c1,2 - \Delta c1$$

mit WDD2 (Wasserdampfdurchlässigkeit des unbekannten zu messenden Barriereelements), WDD1 (Wasserdampfdurchlässigkeit des bekannten Barriereelements), $\Delta c1,2$ (Konzentrationsänderung über beide Barriereelemente), $\Delta c1$ (Konzentrationsänderung über das bekannte Barriereelement).

Bei einem erfindungsgemäßen Verfahren zur Bestimmung der Permeationsrate eines Barriereelements, wird mindestens ein zu permeierenden Gases einem Testgasraum kontinuierlich zugeführt und/oder ist bei konstantem Partialdruck darin enthalten.

Als Permeaten kommen alle kondensierbaren, nichtkondensierbaren, toxischen und brennbaren gasförmigen Substanzen und Dämpfe und/oder Dampfgemische in Frage. Dies gilt beispielsweise für CO, CO2, NH3, SF6, Benzindämpfe, Benzol, Aromen, Lösungsmitteldämpfe (Aceton, 2-Propanol), sowie deren Isotope. Bevorzugt soll jedoch Wasserdampf als Permeat zur Bestimmung der Permeationsrate eines Barriereelements zum Einsatz kommen.

Der durch eine Querschnittsfläche AB eines Barriereelements permeierte Permeat gelangt in eine Messkammer und diffundiert von dort entlang einer Diffusionsstrecke durch mindestens ein Hohlleitelement mit mindestens einer freien, der Querschnittsfläche $A_B$ ungleichen Querschnittsfläche $A_G$, in eine Permeatensenke und wird dort ad- und/oder absorbiert und/oder durch ein trockenes Spülgas so abgeführt, dass an der Permeatensenke eine konstante Permeatenkonzentration unterhalb der Nachweisgrenze eingestellt ist. Dabei kann die Konzentration des Permeaten an der Permeatensenke gleich null betragen.

Währenddessen wird durch die Messkammer und/oder durch mindestens ein Hohlleitelement, Strahlung mit mindestens einer Absorptionswellenlänge eines jeweiligen Permeaten, die von mindestens einer Strahlungsquelle emittiert wird, bei Einpositionsmessung, an mindestens einer bekannten Position xi durch ein Volumenelement d der Diffusionsstrecke und bei Mehrpositionsmessung, an mindestens zwei bekannten Positionen xi, xii durch jeweils ein Volumenelement di, dii der Diffusionsstrecke geführt und auf mindestens einen optischen Detektor gerichtet, wobei die durch die Permeatenkonzentration verursachte Intensitätsänderung der Strahlung detektiert und daraus die Permeatenkonzentration c bestimmt wird.

Bei der Einpositionsmessung entspricht die bekannte Position xi entlang der Diffusionsstrecke, der absoluten Weglänge der Diffusionsstrecke zwischen der Position xi und dem Barriereelement oder der Permeatensenke.

Auf der Grundlage des Lambert-Beerschen Gesetzes

$$(10) \qquad -\lg(I1/I0) = \varepsilon * c * d$$

wird dann die Konzentration ci des Permeaten an der Position xi bzw. bei Mehrpositionsmessung die Permeatkonzentration ci und cii an der Position xi und xii bestimmt.

Wie eingangs beschrieben, bildet sich im Gleichgewichtszustand ($M_B = M_G$) entlang der Diffusionsstrecke ein Konzentrationsgradient des Permeaten aus. Durch die Bestimmung der Permeatenkonzentration an zwei verschiedenen Positionen xi und xii entlang der Diffusionsstrecke kann die Änderung der Permeatenkonzentration Ac bestimmt werden (Zweipositionsmessung). Dabei entspricht die absolute Weglänge der Diffusionsstrecke zwischen den beiden Positionen xi und xii, einem Diffusionsstreckenabschnitt $\Delta x$. Mit der Kenntnis von Ac und $\Delta x$ kann dann der Konzentrationsgradient des Permeaten bestimmt werden. Für den Fall, dass die Diffusionskonstante D eines jeweiligen Permeaten aus Tabellenwerken nicht bekannt ist, kann diese mit Referenzbarriereelementen bekannter Permeationsrate bestimmt werden. Die Diffusionskonstante D kann auch durch eine isostatische Messung nach einem Trägergasverfahren bei einem größeren Konzentrationsgradienten oder größerer Fläche (des Barriereelements) durchgeführt werden.

Aus dem aus Ac und der Länge des Diffusionsstreckenabschnitts $\Delta x$ gebildeten Konzentrationsgradienten des Permeaten $\Delta c/\Delta x$, multipliziert mit dem Quotienten aus der freien Querschnittsfläche AG des Diffusionsabschnitts $\Delta x$ und der permeablen Querschnittsfläche $A_B$ des Barriereelements ($A_G/A_B$), multipliziert mit dem negativen Wert der Diffusionskonstante D des Permeaten wird dann die Permeationsrate $PR_B$ des Barriereelements mit der oben genannten Gleichung (6) berechnet.

Bei der Einpositionsmessung wird Strahlung an nur einer bekannten Position xi entlang oder senkrecht durch ein Volumenelement d der Diffusionsstrecke durch die Diffusionsstrecke geführt. Unter der Annahme, dass die Permeatkonzentration an der Permeatensenke stetig gleich null ist, entspricht die an der Position xi bestimmte Permeatkonzentration ci der Änderung der Permeatkonzentration $\Delta c$. Demnach entspricht die absolute Weglänge der Diffusionsstrecke zwischen der Position xi und der Permeatensenke, dem Diffusionsstreckenabschnitt $\Delta x$.

Gerätebedingte Messfehler (Strahlungsquelle, Sekundärelektronik), die bei unabhängiger Messung (an verschiedenen Orten) den Messfehler erhöhen würden, können durch komparative Messung (vergleichende Verwendung der gleichen Strahlenquelle) minimiert werden. Dazu kann die Strahlung einer Strahlenquelle zum Beispiel durch einen Strahlteiler geteilt werden und dann an zwei Positionen gleichzeitig durch die Diffusionsstrecke geführt, auf zwei Detektoren gerichtet werden.

Für eine optimale Messung sollte der Zielbereich der Permeationsrate bekannt sein. Somit kann eine entsprechende Messkammer mit Hohlleitelement und Permeatensenke, mit angepassten Parametern $A_G$ und $\Delta x$ vorab ausgewählt werden. Die Permeatenkonzentration in der Messkammer und im Hohlleitelement kann zudem über die Veränderung der Querschnittsfläche $A_B$ des zu untersuchenden Barriereelements eingestellt werden. Dazu kann der Testgasraum eine Blende aufweisen, mit der die Querschnittsfläche $A_B$ variiert werden kann.

Zur Vergrößerung des Dynamikbereichs bei der Einstellung der Parameter ($A_B$, $A_G$, $\Delta x$,), kann bei der Untersuchung unbekannter Proben, eine (zeitlich und räumlich) parallel durchgeführte Messung mit deutlich unterschiedlichen Parametern erfolgen, bei dem mehrere Hohlleitelemente, die zueinander unterschiedliche freie innere Querschnittsflächen $A_G$ aufweisen können, parallel zueinander, ausgehend von der Messkammer in Richtung Permeatensenke angeordnet sind. Für den Fall, dass die gemessene Permeatenkonzentration außerhalb des Messbereichs liegt, können die Hohlleitelemente dann mit Ventilen oder Blenden wahlweise auf- oder abgesperrt werden, wodurch die Diffusionsstrecke und der Diffusionsquerschnitt $A_G$ und/oder $A_B$ variiert werden können.

Als Messverfahren sollte bevorzugt die Laserdiodenspektroskopie eingesetzt werden. Als Strahlungsquelle kann aber auch ein Quantenkaskadenlaser, einem Bleisalzlaser oder ein Faserlaser eingesetzt werden. Vorteilhaft kann ebenfalls die Verbindung mit FTIR Spektroskopie, Cavity-Ring-Down Spektroskopie, photoakustische Spektroskopie sowie weiteren optisch spektroskopischen Techniken (dispersive, nicht dispersive) in unterschiedlichen Spektralbereichen sein. Prinzipiell können alle nicht-invasiv arbeitenden Sensoren/Detektoren wie beispielsweise kapazitive und spektroskopische (optische, Mikrowellen-, THz-) Sensoren verwendet werden, die den Permeaten nicht verbrauchen bzw. den Konzentrationsgradienten des Permeaten nicht stören.

Die Bestimmung der Permeationsrate sollte bei Anwendungsbedingungen des Barriereelements in einem Temperaturbereich von -20°C bis 85°C und bei Atmosphärenbedingungen erfolgen. Die Messung kann beginnen, wenn der Konzentrationsgradient des Permeaten konstant ist (Massenstrom im Gleichgewicht $M_B = M_G$). Während der Messung sollte die Temperatur konstant gehalten werden, da Adsorptions- und Desorptionsvorgänge stark temperaturabhängig sind und die Messung beeinflussen könnten. Die ebenfalls temperaturabhängige Diffusionskonstante D des jeweiligen Permeaten ist bekannt oder kann alternativ anhand von Referenz-Barriereelementen mit bekannter Permeabilität ermittelt werden.

Da die Diffusion entlang der Diffusionsstrecke sehr langsam erfolgt, hängt die Zeit bis zum Erreichen des Gleichgewichtszustands zum einen von der Länge der Diffusionsstecke und zum anderen von Adsorption- und Desorptionsvorgängen ab. Bei Hohlleitelementen mit immer kleineren freien inneren Querschnittsflächen $A_G$, steigt das Verhältnis der Anzahl der Teilchenstöße des Permeaten mit den Wandatomen des Mess- und/oder des Hohlleitelements im Vergleich zur Anzahl der Teilchenstöße des Permeaten mit weiteren Gasatomen. Damit steigt auch die Wahrscheinlichkeit einer Adsorption, da die Desorptionswahrscheinlichkeit deutlich geringer ist (die Zeit, bis das Permeatteilchen wieder desorbiert, ist deutlich länger), wodurch sich die Diffusion entlang der Diffusionsstrecke verzögert. Dies bedingt sehr lange Einstellzeiten bis zum Gleichgewicht des Permeatmassenstroms. Um dem entgegenzuwirken, kann ein Hohlleitelement durch Spülen mit trockenem inerten Gas, durch thermische Desorption, UV-Bestrahlung oder mittels reaktivem Gas vorkonditioniert werden. Da die Methoden zur Vorkonditionierung für Proben, wie zum Beispiel für Folien nicht geeignet sind, kann die Messkammer und die Hohlleitelemente während des Probenwechsels durch Ventile oder Blenden abgesperrt werden.

Eine Beschleunigung der Ausbildung eines Konzentrationsgradienten des Permeaten kann dadurch erreicht werden, dass die Messkammer und das Hohlleitelement schrittweise mit einem Trockengas gespült werden. Dabei nähert sich die Permeatkonzentration innerhalb der Messkammer und des Hohlleitelements ebenfalls schrittweise dem Gleichgewichtszustand an. Bei der Spülung wird Trockengas ausgehend von der Permeatensenke durch ein Hohlleitelement geleitet und über ein Ventil, das unterhalb des Barriereelements an der Messkammer angeordnet ist, abgelassen. Als Trockengas kann beispielsweise Luft, $O_2$, He, Ar, $H_2$ und bevorzugt $N_2$ verwendet werden.

Die Messempfindlichkeit kann durch die Länge der Diffusionsstrecke, die Länge des Diffusionsstreckenabschnitts $\Delta x$, die von der Strahlung durchstrahlte Weglänge eines Volumenelements d der Diffusionsstrecke und/oder durch die Veränderung des Verhältnisses der freien Querschnittsflächen $A_B/A_G$ beeinflusst und eingestellt werden. Demnach kann eine Steigerung der Messempfindlichkeit durch die Verkleinerung der freien Querschnittsfläche $A_G$ gegenüber der freien Querschnittsfläche $A_B$ erreicht werden. Darüber hinaus kann die Messempfindlichkeit durch Verlängerung der Diffusionsstrecke allein oder in Kombination mit einer entlang der Diffusionsstrecke verkleinerten freien Querschnittsfläche $A_G$ gesteigert werden. Es kann aber auch das Verhältnis aus dem Diffusionsstreckenabschnitt $\Delta x$ und der freien Querschnittsfläche $A_G$ zur Steigerung der Messempfindlichkeit verändert werden. Dies ist der Fall, wenn ein Hohlleitelement beispielsweise abschnittsweise als Kapillare ausgebildet ist und/oder wenn der Diffusionsstreckenabschnitt $\Delta x$ vergrößert wird. Weiterhin kann die Messempfindlichkeit erhöht werden, indem die optische Weglänge der Strahlung durch ein Volumenelement d der Diffusionsstrecke verlängert wird. Dabei sollte jedoch die Voraussetzung erfüllt sein, dass die freie innere Querschnittsfläche $A_G$, entlang des Volumenelements d durch das die Strahlung entlang der Diffusionsstrecke geführt wird, durchgehend konstant ist. Darüber hinaus können auch Kombinationen aus den genannten Maßnahamen zur Veränderung der Messempfindlichkeit verwendet werden, so dass eine Messempfindlichkeit erreicht wird bei der Permeationsraten im Bereich von $10^{-3}$ g[$H_2O$] m$^{-2}$ d$^{-1}$ bis $10^{-6}$ g[$H_2O$]m$^{-2}$ d$^{-1}$ bestimmt werden können.

Nachfolgend wird die vorliegende Erfindung anhand mehrerer Ausführungsbeispiele beschrieben. Dabei zeigen:Fign.1a/b: eine erste erfindungsgemäße Vorrichtung in Zweipositionsmessung senkrecht zur Diffusionsstrecke, mit dazugehörigem Verlaufsdiagramm des Permeatkonzentrationsgradienten (Figur 1b), Fign.2a/b: eine Ausführung einer erfindungsgemäßen Vorrichtung in Zweipositionsmessung längs zur Diffusionsstrecke, mit dazugehörigem Verlaufsdiagramm des Permeatkonzentrationsgradienten (Figur 2b), Fign.3a/b: eine Ausführung einer erfindungsgemäßen Vorrichtung in Einpositionsmessung senkrecht zur Diffusionsstrecke, mit dazugehörigem Verlaufsdiagramm des Permeatkonzentrationsgradienten (Figur 3b), Fign.4a/b eine vorteilhafte der erfindungsgemäßen Vorrichtung mit parallel angeordneten Hohlleitelementen und dem dazugehörigem Verlaufsdiagramm des Permeatkonzentrationsgradienten (Figur 4b),

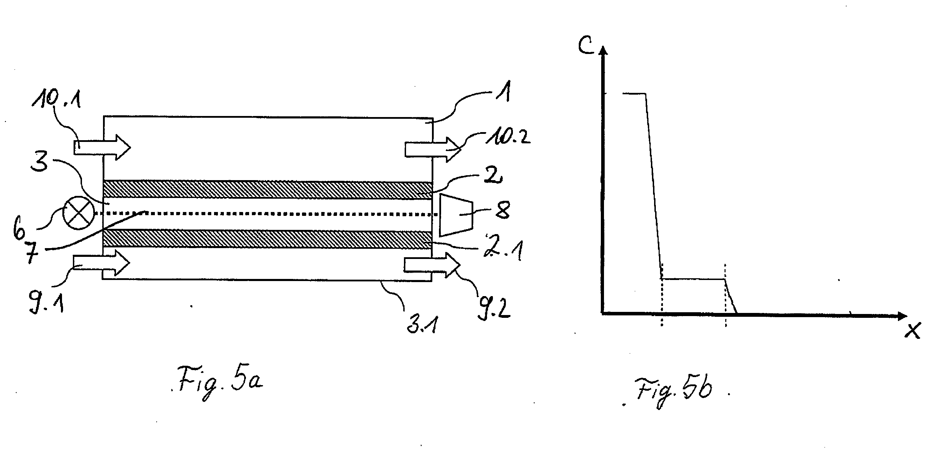

Fign.5a/b eine weitere vorteilhafte Vorrichtung, die nicht Teil der Erfindung ist, mit einem zweiten Barriereelement und dem dazugehörigem Verlaufsdiagramm des Permeatkonzentrationsgradienten (Figur 5b).

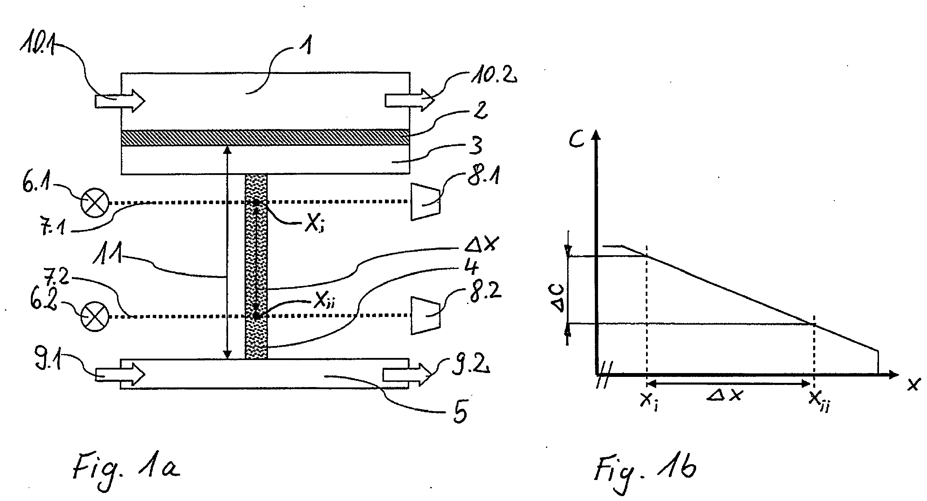

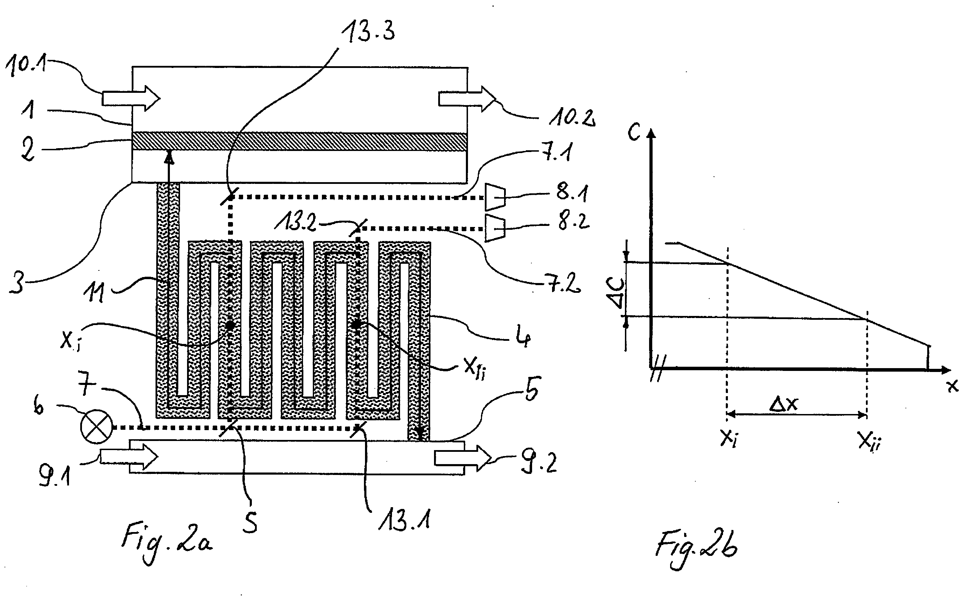

Die Elemente und Parameter der Figuren 2a bis 5a entsprechen, bis auf die jeweils erläuterten besonderen Ausführungsformen, dem Beispiel der nachfolgend beschriebenen Figur 1 und sind mit gleichen Bezugszeichen versehen.

Bei der in der Figur 1a dargestellten Vorrichtung wird über einen Einlass 10.1 kontinuierlich Wasserdampf (zu permeierendes Gas) mit 30 sccm bei konstantem Druck von 1013 mbar einem Testgasraum 1 zugeführt und über einen Auslass 10.2 abgeführt. Der Testgasraum 1 besitzt eine Öffnung mit einer Querschnittsfläche $A_B$, die durch ein flächiges Barriereelement 2 von einer Messkammer 3 abgetrennt ist. Ausgehend von dem Testgasraum 1 kann Wasserdampf über eine Querschnittsfläche $A_B$ durch das Barriereelement 2 in die Messkammer 3 permeieren. Von dort diffundiert der Wasserdampf dann entlang einer Diffusionsstrecke 11 durch ein Hohlleitelement 4, mit einer Querschnittsfläche $A_G$, in eine Permeatensenke 5, die als T-Stück mit einem Innendurchmesser von 40 mm ausgebildet ist. Innerhalb des Hohlleitelements ist eine Gasatmosphäre mit trockenem Gas ausgebildet. Für die Ausbildung der Gasphase kann beispielsweise Luft, $O_2$, He, Ar, $H_2$ und bevorzugt $N_2$ verwendet werden. Die Permeatensenke 5 wird dabei kontinuierlich mit 30 sccm trockenem Spülgas, das dem Gas der Gasatmosphäre im Hohlleitelement 4 entsprechen sollte und durch einen Spülgaseinlass 9.1 zugeführt und von einem Spülgasauslass 9.2 abgeführt wird, durchströmt. Der Wasserdampf wird somit kontinuierlich abgeführt, ohne dass dabei ein "Wasserstrahlpumpeneffekt" oder Turbulenzen innerhalb der Diffusionsstrecke 11 entstehen. Der Testgasraum 1, die Messkammer 3 mit Hohlleitelement 4 und die Permeatensenke 5, sind gegenüber der Umgebungsatmosphäre druck- und fluiddicht abgeschlossen.

Es stellt sich ein Massenstromgleichgewicht des Wasserdampfs durch das Barriereelement 2 und durch die Diffusionsstrecke 11 ein. Entlang der Diffusionsstrecke 11 bildet sich dabei ein Wasserdampfkonzentrationsgradient aus. Die Wasserdampfkonzentration fällt wie in der Figur 1b dargestellt, in Richtung der Permeatensenke 5 ab. Nun wird die Wasserdampfkonzentration an zwei verschiedenen Positionen $x_i$ und $x_{ii}$ entlang der Diffusionsstrecke 11 mittels Laserdiodenspektroskopie (LDS) bestimmt. Dazu wird ein erster Laserstrahl 7.1 mit einer Wellenlänge, die einer Absorptionswellenlänge von Wasserdampf entspricht, von einer Laserdiode 6.1 emittiert und an einer Position $x_i$, durch ein Fensterelement (nicht gezeigt) im Hohlleitelement 4, senkrecht durch ein Volumenelement $d_i$ (nicht gezeigt) der Diffusionsstrecke 11 geführt, auf einen ersten Detektor 8.1 gerichtet und ein zweiter Laserstahl 7.2, mit einer Wellenlänge, die einer Absorptionswellenlänge von Wasserdampf entspricht, von einer Laserdiode 6.2 emittiert und an einer Position $x_{ii}$, durch ein zweites Fensterelement (nicht gezeigt) im Hohlleitelement 4, senkrecht durch ein Volumenelement $d_{ii}$ (nicht gezeigt) der Diffusionsstrecke 11 geführt, auf einen zweiten Detektor 8.2 gerichtet. Am ersten Detektor 8.1 wird dabei die durch die Wasserdampfkonzentration an der Position $x_i$ hervorgerufene Intensitätsänderung des Laserstrahls 7.1 gemessen und am zweiten Detektor 8.2 die durch die Wasserdampfkonzentration an der Position $x_{ii}$ hervorgerufene Intensitätsänderung des Laserstrahls 7.2 gemessen. Die jeweiligen Wasserdampfkonzentrationen $c_i$ und $c_{ii}$ an der Stelle $x_i$ und $x_{ii}$ werden dann auf der Grundlage des Lambert-Beerschen Gesetzes (Gleichung 10)berechnet. Durch die Bestimmung von $\Delta c$ (Differenz aus $c_i$ und $c_{ii}$) und dem Diffusionsstreckenabschnitt $\Delta x$ (Weglänge der Diffusionsstrecke zwischen $x_i$ und $x_{ii}$) wird dann der Konzentrationsgradient des Wasserdampfs entlang der Diffusionsstrecke 11 ermittelt. Mit der Gleichung (6) wird dann die Wasserdampfpermeationsrate durch das Barriereelement 4 berechnet.

In der nachfolgenden Tabelle 1 sind Beispielberechnungen für die Wasserdampfpermeation durch eine Folie dargestellt.

Tabelle 1

| Versuch | 1 | 2 | 3 | 4 | 5 | 6 |
|---|---|---|---|---|---|---|
| $D[m^2/s]$ bei 25 °C | 2.60E-05 | 2.60E-05 | 2.60E-05 | 2.60E-05 | 2.60E-05 | 2.60E-05 |
| $\Delta x$ [m] | 0.5 | 0.5 | 0.5 | 1 | 10 | 0.5 |
| $A_B$ [$m^2$] | 1.35E-02 | 1.35E-02 | 1.35E-02 | 1.35E-02 | 1.35E-02 | 1.35E-02 |
| $A_G$ [$m^2$] | 1.26E-05 | 1.26E-05 | 1.26E-05 | 1.26E-05 | 1.26E-05 | 7.85E-09 |
| $\Delta c$ [$g[H_2O]/m^{-3}$] | 0.023873 | 0.002387 | 0.000239 | 0.000477 | 0.004775 | 0.381967 |
| $\Delta c$ [ppm] | 29.71 | 2.97 | 0.30 | 0.59 | 5.94 | 475.34 |
| $PR_B$ [$g[H_2O]m^{-2}d^{-1}$] | 1.00E-04 | 1.00E-05 | 1.00E-06 | 1.00E-06 | 1.00E-06 | 1.00E-06 |

Die Figur 2a stellt eine Ausführungsform der in Figur 1a beschriebenen Vorrichtung dar, bei der zur Steigerung der Messempfindlichkeit ein mäanderförmiges Hohlleitelement 4 mit einer dadurch verlängerten Diffusionsstrecke 11 eingesetzt wird. Weiterhin wird der von einer Laserdiode 6 emittierte Laserstrahl 7 an einem Strahlteiler S in zwei Laserstrahlen 7.1 und 7.2 geteilt. Dabei wird der Laserstrahl 7.1 durch Fensterelemente (nicht gezeigt) im Hohlleitelement 4, längs durch ein Volumenelement $d_i$ (nicht gezeigt), mit konstanter Querschnittsfläche $A_G$, entlang der Diffusionsstrecke 11 geführt und mit einem reflektierendem Element 13.3 auf einen Detektor 8.1 gerichtet. Der Laserstrahl 7.2 wird mit einem reflektierendem Element 13.1 durch Fensterelemente (nicht gezeigt) im Hohlleitelement 4, längs durch ein Volumenelement $d_{ii}$ (nicht gezeigt), mit konstanter Querschnittsfläche $A_G$, entlang der Diffusionsstrecke 11 geführt und mit einem reflektierendem Element 13.2 auf einen Detektor 8.2 gerichtet. Dabei entspricht die Position $x_i$, der Hälfte des

von dem Laserstrahl 7.1 durchstrahlten Volumenelements ($d_i/2$) und die Position $x_{ii}$, der Hälfte des von dem Laserstrahl 7.2 durchstrahlten Volumenelements ($d_{ii}/2$). Dadurch entspricht in diesem Fall, der Diffusionsstreckenabschnitt $\Delta x$ der Weglänge zwischen $d_i/2 = x_i$ und $d_{ii}/2 = x_{ii}$.

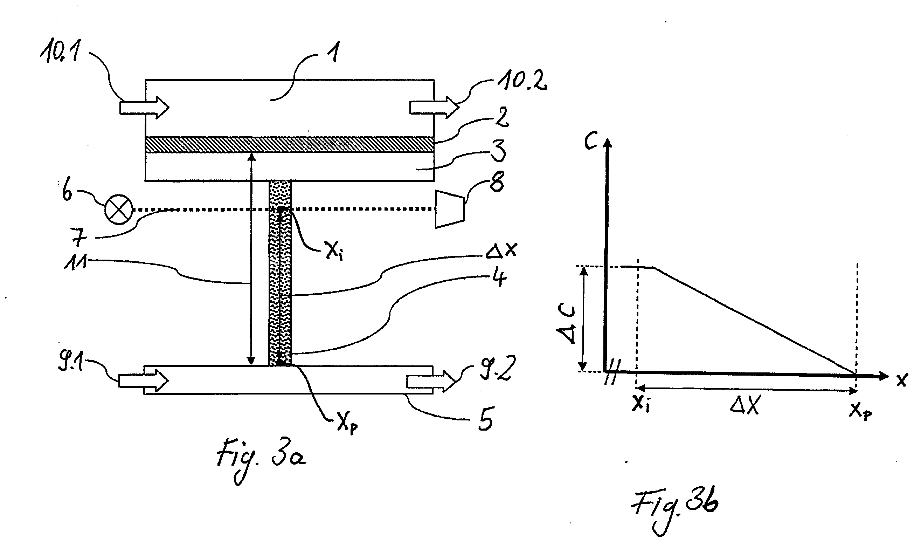

Die Figur 3a zeigt die schematische Darstellung einer Vorrichtung wie in Figur 1a, mit dem Unterschied, dass die Bestimmung des Konzentrationsgradienten des Permeaten ($\Delta c/\Delta x$) durch die Messung an nur einer Position $x_i$ entlang der Diffusionsstrecke 11 erfolgt (Einpositionsmessung). Dabei wird ein Laserstrahl 7 mit einer Wellenlänge die einer Absorptionswellenlänge des Permeaten entspricht, von einer Laserdiode 6 emittiert und an einer bekannten Position $x_i$ durch Fensterelemente (nicht gezeigt) im Hohlleitelement 4 senkrecht durch ein Volumenelement d (nicht gezeigt) der Diffusionsstrecke 11 geführt und auf einen Detektor 8 gerichtet.

Aufgrund der kontinuierlichen Abführung des Permeaten in der Permeatensenke 5 wird die Konzentration des Permeaten an der Position $x_P$ (Mündung der Diffusionsstrecke 11) sehr klein. Unter der Annahme, dass die Permeatenkonzentration an der Position $x_P$ in der Permeatensenke 5 konstant gleich null ist, entspricht die Änderung der Permeatenkonzentration $\Delta c$, der Permeatenkonzentration $c_i$ an der Position $x_i$. Der Diffusionsstreckenabschnitt $\Delta x$ entspricht dann dem Abstand zwischen der Position $x_i$ und der Position $x_P$ an der Permeatensenke 5.

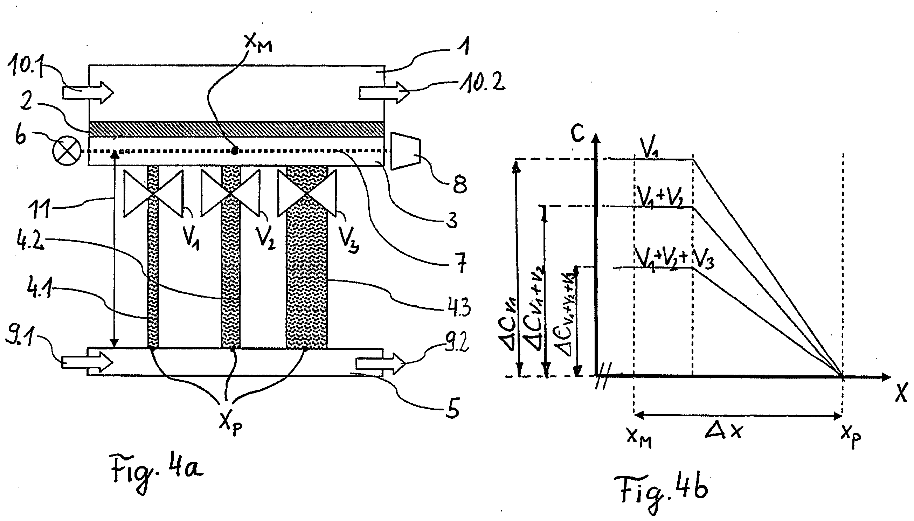

Zur beschleunigten Einstellung des Gleichgewichtszustandes des Permeatenmassenstroms und zur Erweiterung des Dynamikbereiches während der Messung, werden wie in der Figur 4a dargestellt, mehrere Hohlleitelemente 4.1, 4.2, 4.3, mit voneinander verschiedenen inneren freien Querschnittsflächen AG, parallel angeordnet. Über Ventile V1, V2, V3 können die Hohlleitelemente 4.1, 4.2, 4.3 auf- und/oder abgesperrt werden, so dass die vom Permeaten diffundierbare freie innere Querschnittsfläche AG beeinflusst werden kann. Für den Fall, dass die zu bestimmende Permeation des Barriereelements 2 sehr gering ist (Konzentration liegt unterhalb der Nachweisgrenze des Sensors/Detektors) bzw., wenn die Permeatenkonzentration im Bereich der Messung zu niedrig ist, wird eine Steigerung der Messempfindlichkeit durch Verringerung der freien inneren Querschnittsfläche AG erreicht. Dazu werden die Hohlleitelemente 4.3, 4.2 nacheinander, mit der größten freien Querschnittsfläche AG beginnend, an den jeweiligen Ventilen abgesperrt. Wie dem schematischen Verlaufsdiagramm des Konzentrationsgradienten des Permeaten in der Figur 4b zu entnehmen ist, führt dies zu einer Steigerung der Permeatenkonzentration an der Position $x_M$.

In nicht dargestellter Form besteht aber auch die Möglichkeit, jeweils eine Messung für jedes Hohlleitelement 4.1, 4.2, 4.3 entlang der Diffusionsstrecke 11, in Einpositions- und/oder Zweipositionsmessung durchzuführen.

Bei dem in der Figur 5a dargestellten Beispiel, das nicht Teil der Erfindung ist, einer Vorrichtung zur Bestimmung der Permeationsrate eines Barriere- oder Ultrabarriereelements ist im Anschluss an eine erste Messkammer 3, ein zweites Barriereelement 2.1 mit bekannter Permeabilität und eine zweite Messkammer 3.1 angeordnet.


**Patentansprüche**

1. Vorrichtung zur Bestimmung der Permeationsrate eines Barriereelements, bei der
   ein Barriereelement (2) zumindest bereichsweise eine Abtrennung mit einer permeierbaren Querschnittsfläche $A_B$, zwischen einem Testgasraum (1) und einer Messkammer (3) bildet, wobei in dem Testgasraum (1) ein zu permeierendes Gas bei konstantem Partialdruck enthalten ist, und
   an der Messkammer (3) mindestens ein Hohlleitelement (4) mit einer Permeatensenke (5) angeordnet oder daran ausgebildet sind, wobei
   das Hohlleitelement (4) an mindestens einer Position eine gegenüber der Querschnittsfläche $A_B$ veränderte Querschnittsfläche $A_G$ aufweist,
   dabei an mindestens einer bekannten Position entlang der Messkammer (3) und/oder des Hohlleitelements (4), die Permeatenkonzentration mit mindestens einem Detektor (8, 8.1, 8.2), nicht-invasiv messbar ist,
   **dadurch gekennzeichnet, dass**
   mindestens ein Hohlleitelement (4) mit einer Permeatensenke (5) so angeordnet oder daran ausgebildet sind, dass ausgehend von dem Barriereelement (2) durch das Hohlleitelement (4) Permeat allein in Folge von Diffusion durch eine für einen Permeaten diffundierbare, strömungsfreie Diffusionsstrecke (11) bis in die Permeatensenke (5) gelangt.

2. Vorrichtung nach Anspruch 1, **dadurch gekennzeichnet, dass** von mindestens einer Strahlungsquelle (6, 6.1, 6.2) emittierte Strahlung mit mindestens einer Wellenlänge, die einer Absorptionswellenlänge eines Permeaten entspricht, an mindestens einer bekannten Position $x_i$ entlang und/oder senkrecht, durch ein Volumenabschnitt d, durch die Diffusionsstrecke (11) geführt auf mindestens einen Detektor (8, 8.1, 8.2) gerichtet ist.

3. Vorrichtung nach vorhergehenden Ansprüchen, **dadurch gekennzeichnet, dass** zur Messung der Permeatenkonzentration in der Messkammer und/oder im Hohlleitelement (4), FTIR Spektroskopie, Cavity-Ring-Down Spektroskopie, photoakustische Spektroskopie und/oder optisch spektroskopischen Techniken, bevorzugt Laserdiodenspektroskopie einsetzbar sind.

4. Vorrichtung nach einem der vorhergehenden Ansprüche, **dadurch gekennzeichnet, dass** ein Hohlleitelement (4) länger ist, als der Abstand zwischen dem Barriereelement (2) und der Permeatsenke (5).

5. Vorrichtung nach Anspruch 1, **dadurch gekennzeichnet, dass** innerhalb der Messkammer (3), des Hohlleitelements (4) und der Permeatensenke (5) eine Gasatmosphäre mit Luft, $O_2$, He, Ar, $H_2$ und bevorzugt $N_2$ gebildet ist.

6. Vorrichtung nach einem der vorhergehenden Ansprüche, **dadurch gekennzeichnet, dass** eine Messkammer (3) und/oder ein Hohlleitelement (4) an mindestens einer Position absperrbar und/oder entnehmbar ausgebildet ist/sind.

7. Vorrichtung nach einem der vorhergehenden Ansprüche, **dadurch gekennzeichnet, dass** zwischen der Messkammer (3) und der Permeatsenke (5) mindestens zwei Hohlleitelemente (4), mit voneinander verschiedenen inneren freien Querschnittsflächen $A_G$ parallel angeordnet sind, wobei die inneren freien Querschnittsflächen $A_G$ der Hohlleitelemente (4) von der Querschnittsfläche $A_B$ verschieden sind.

8. Vorrichtung nach einem der vorhergehenden Ansprüche, **dadurch gekennzeichnet, dass** in der Permeatsenke (5) Ad- und/oder Absorber für Permeat vorhanden ist/sind und/oder dort trockenes Spülgas zur Abführung des Permeaten strömt.

9. Vorrichtung nach einem der vorhergehenden Ansprüche, **dadurch gekennzeichnet, dass** an einer Messkammer (3, 3.1) und/oder an einem Hohlleitelement (4) mindestens ein Fensterelement für den Ein- und/oder Austritt von Laserstrahlung in vorhanden ist/sind.

10. Vorrichtung nach vorhergehenden Ansprüchen, **dadurch gekennzeichnet, dass** die Länge der Diffusionsstrecke, die Länge eines Diffusionsstreckenabschnitts $\Delta x$, die Größe der freien Querschnittsfläche $A_G$ und/oder die Länge des von der Strahlung durchstrahlten Volumenelements d der Diffusionsstrecke zur Einstellung der jeweiligen Messempfindlichkeit einstellbar ist/sind;
wobei
die Länge eines Diffusionsstreckenabschnitts $\Delta x$, der absoluten Weglänge der Diffusionsstrecke zwischen zwei Positionen xi und xii, an denen entlang der Diffusionsstrecke die Änderung der Permeatenkonzentration $\Delta c$ bestimmt werden, entspricht.

11. Verfahren zur Bestimmung der Permeationsrate eines Barriereelements, bei dem
mindestens zu permeierendes Gas einem Testgasraum (1) kontinuierlich zugeführt wird und/oder bei konstantem Partialdruck darin enthalten ist, wobei ein
durch eine Querschnittsfläche $A_B$ eines Barriereelements (2) permeierter Permeat, durch eine Messkammer (3) entlang einer Diffusionsstrecke (11) durch mindestens ein Hohlleitelement (4), mit mindestens einer freien, der Querschnittsfläche $A_B$ ungleichen Querschnittsfläche $A_G$, strömungsfrei allein in Folge von Diffusion durch die Diffusionsstrecke zur Permeatensenke gelangt in eine Permeatensenke (5) diffundiert und dort ad- und/oder absorbiert und/oder abgeführt wird, so dass an der Permeatensenke (5) eine konstante Permeatenkonzentration unterhalb der Nachweisgrenze eines Detektors (8, 8.1, 8.2) eingestellt ist, dabei
durch die Messkammer (3) und/oder durch mindestens ein Hohlleitelement (4), Strahlung mit mindestens einer Absorptionswellenlänge eines jeweiligen Permeaten, die von mindestens einer Strahlungsquelle (6, 6.1, 6.2) emittiert wird,
bei Einpositionsmessung an mindestens einer bekannten Position $x_i$ durch ein Volumenelement d der Diffusionsstrecke (11) und
bei Mehrpositionsmessung an mindestens zwei bekannten Positionen $x_i$, $x_{ii}$ durch jeweils ein Volumenelement $d_i$, $d_{ii}$ der Diffusionsstrecke (11) geführt,
auf mindestens einen optischen Detektor (8.1, 8.2) gerichtet wird, und
dabei die durch die Permeatenkonzentration verursachte Intensitätsänderung der Strahlung detektiert und daraus die Permeatenkonzentration $c_i$, $c_{ii}$ bestimmt wird, wobei
die Änderung der Permeatenkonzentration $\Delta c$ entlang eines Diffusionsstreckenabschnitts $\Delta x$, der dem Abstand zwischen der bekannten Position $x_i$ und der Permeatsenke (5) oder
dem Abstand zwischen mindestens zwei bekannten Positionen $x_i$ und $x_{ii}$ entlang der Diffusionsstrecke (11) entspricht, bestimmt wird,
und aus dem aus $\Delta c$ und der Länge des Diffusionsstreckenabschnitts $\Delta x$ gebildeten Konzentrationsgradienten des Permeaten $\Delta c/\Delta x$, multipliziert mit dem Quotienten aus der freien Querschnittsfläche $A_G$ des Diffusionsabschnitts

$\Delta x$ und der permeablen Querschnittsfläche $A_B$ des Barriereelements (2) $A_G/A_B$, multipliziert mit dem negativen Wert der Diffusionskonstante D des Permeaten, die Permeationsrate $PR_B$ des Barriereelements (2) berechnet wird.

12. Verfahren nach einem der vorhergehenden Ansprüche, **dadurch gekennzeichnet, dass** die Messkammer (3) und/oder das Hohlleitelement (4) mit UV-Strahlung, thermischer Desorption oder mit Spülung reaktiver Gase vorkonditioniert wird/werden.

13. Verfahren nach einem der vorhergehenden Ansprüche, **dadurch gekennzeichnet, dass** Strahlung senkrecht zur oder entlang durch ein Volumenelement d der Diffusionsstrecke (11) geführt wird.

14. Verfahren nach einem der vorhergehenden Ansprüche, **dadurch gekennzeichnet, dass** die Bestimmung der Permeatenkonzentration bei konstanter und/oder bekannter Temperatur durchgeführt wird.

**Claims**

1. Device for determining the permeation rate of a barrier element, in which
a barrier element (2), at least in sections, forms a separation with a permeable cross-sectional area $A_B$ between a test gas space (1) and a measurement chamber (3), the test gas space (1) containing a gas, to be permeated, at constant partial pressure, and
on the measurement chamber (3), at least one hollow conducting element (4) with a permeate sink (5) are arranged or formed thereon, wherein
the hollow conducting element (4) has a cross-sectional area $A_G$, modified compared to the cross-sectional area $A_B$, at at least one position,
with the permeate concentration being measurable in a non-invasive fashion using at least one detector (8, 8.1, 8.2) at at least one known position along the measurement chamber (3) and/or the hollow conducting element (4)
**characterized in that**
at least one hollow conducting element (4) with a permeate sink (5) is arranged or formed on the measurement chamber (3) in such a way that a flow-free diffusion path (11), through which a permeate can diffuse, is formed starting from the barrier element (2), through the hollow conducting element (4), up to the permeate sink (5),

2. Device according to Claim 1, **characterized in that**, at at least one known position $x_i$, radiation emitted by at least one radiation source (6, 6.1, 6.2), having at least one wavelength, which corresponds to an absorption wavelength of a permeate, is directed at at least one detector (8, 8.1, 8.2), guided along and/or perpendicular, through a volume section d, through the diffusion path (11).

3. Device according to preceding claims, **characterized in that**, in order to measure the permeate concentration in the measurement chamber and/or in the hollow conducting element (4), use can be made of FTIR spectroscopy, cavity-ring-down spectroscopy, photoacoustic spectroscopy and/or optical spectroscopic techniques, preferably laser-diode spectroscopy.

4. Device according to one of the preceding claims, **characterized in that** a hollow conducting element (4) is longer than the distance between the barrier element (2) and the permeate sink (5).

5. Device according to Claim 1, **characterized in that** a gas atmosphere having air, $O_2$, He, Ar, $H_2$ and preferably $N_2$ is formed within the measurement chamber (3), the hollow conducting element (4) and the permeate sink (5).

6. Device according to one of the preceding claims, **characterized in that** a measurement chamber (3) and/or a hollow conducting element (4) is/are formed such that it/they can be locked and/or removed at at least one position.

7. Device according to one of the preceding claims, **characterized in that** at least two hollow conducting elements (4) with mutually different internal clear cross-sectional areas $A_G$ are arranged in parallel between the measurement chamber (3) and the permeate sink (5), wherein the internal clear cross-sectional areas $A_G$ of the hollow conducting elements (4) differ from the cross-sectional area $A_B$.

8. Device according to one of the preceding claims, **characterized in that** adsorbers and/or absorbers for permeate is/are present in the permeate sink (5) and/or dry purge gas flows there for removing the permeate.

9.  Device according to one of the preceding claims, **characterized in that** at least one window element for the entry and/or exit of laser radiation is/are present on a measurement chamber (3, 3.1) and/or a hollow conducting element (4).

10. Device according to preceding claims, **characterized in that** the length of the diffusion path, the length of the diffusion path section $\Delta x$, the size of the clear cross-sectional area $A_G$ and/or the length of the volume element d of the diffusion path, through which the radiation radiates, can be set for setting the respective measurement sensitivity; wherein
    the length of the diffusion path section $\Delta x$ corresponds to the absolute path length of the diffusion path between two positions xi and xii, where along the diffusion path the changes in the permeate concentration $\Delta c$ are determined.

11. Method for determining the permeation rate of a barrier element, in which
    gas at least to be permeated is continuously supplied to and/or kept at constant partial pressure in a test gas space (1), wherein a
    permeate, which permeated through a cross-sectional area $A_B$ of a barrier element (2), diffuses without flowing through a measurement chamber (3) along a diffusion path (11) through at least one hollow conducting element (4), with at least one clear cross-sectional area $A_G$ different from the cross-sectional area $A_B$, into a permeate sink (5) and is adsorbed and/or absorbed and/or removed from there such that a constant permeate concentration below the detection limit of a detector (8, 8.1, 8.2) is set at the permeate sink (5), with, in the process,
    radiation having at least one absorption wavelength of a respective permeate, which is emitted by at least one radiation source (6, 6.1, 6.2) being directed through the measurement chamber (3) and/or through at least one hollow conducting element (4),
    guided through one volume element d of the diffusion path (11) at at least one known position $x_i$ in the case of a single-position measurement and
    through respectively one volume element $d_i$, $d_{ii}$ of the diffusion path (11) at at least two known positions $x_i$, $x_{ii}$ in the case of a multiple position measurement,
    directed at at least one optical detector (8.1, 8.2), and,
    in the process, the intensity modification of the radiation as a result of the permeate concentration being detected and the permeate concentration $c_i$, $c_{ii}$ being determined therefrom, wherein
    the change in the permeate concentration $\Delta c$ being determined along a diffusion path section $\Delta x$, which corresponds to the distance
    between the known position $x_i$ and the permeate sink (5) or
    the distance between at least two known positions $x_i$ and $x_{ii}$ along the diffusion path (11)
    and the permeation rate $PR_B$ of the barrier element (2) is calculated from the concentration gradient of the permeate $\Delta c/\Delta x$, formed from $\Delta c$ and the length of the diffusion path section $\Delta x$, multiplied by the quotient of the clear cross-sectional area $A_G$ of the diffusion section $\Delta x$ and the permeable cross-sectional area $A_B$ of the barrier element (2) $A_G/A_B$, multiplied by the negative value of the diffusion constant D of the permeate.

12. Method according to one of the preceding claims, **characterized in that** the measurement chamber (3) and/or the hollow conducting element (4) is/are preconditioned with UV radiation, thermal desorption or by purging of reactive gases.

13. Method according to one of the preceding claims, **characterized in that** radiation is guided perpendicular to or along through a volume element d of the diffusion path (11).

14. Method according to one of the preceding claims, **characterized in that** the permeate concentration is determined at a constant and/or known temperature.

**Revendications**

1.  Dispositif pour la détermination d'un taux de perméation d'un élément de barrière, dans lequel
    un élément de barrière (2) forme, au moins à certains endroits, une séparation avec une surface de section transversale perméable $A_B$, entre un espace à gaz de test (1) et une chambre de mesure (3), un gaz à filtrer étant contenu dans l'espace à gaz de test (1) avec une pression partielle constante et
    sur la chambre de mesure (3) est disposé ou réalisé au moins un élément de guidage creux (4) avec un puits de perméat (5),
    l'élément de guidage creux (4) présentant, au niveau d'au moins une position, une surface de section transversale

$A_G$ modifiée par rapport à la surface de section transversale $A_B$,
au niveau d'au moins une position connue le long de la chambre de mesure (3) et/ou de l'élément de guidage creux (4), la concentration en perméat pouvant être mesurée de manière non invasive avec au moins un détecteur (8, 8.1, 8.2),

**caractérisé en ce que**
au moins un élément de guidage creux (4) avec un puits de perméat (5) est disposé ou réalisé, de façon à ce que, à partir de l'élément de barrière (2), à travers l'élément de guidage (4), seul le perméat arrive, à la suite d'une diffusion à travers une trajectoire de diffusion (11), diffusible pour un perméat et sans écoulement, jusqu'au puits de perméat (5).

2. Dispositif selon la revendication 1, **caractérisé en ce qu'**un rayonnement, émis par au moins une source de rayonnement (6, 6.1, 6.2), avec au moins une longueur d'onde, qui correspond à une longueur d'onde d'absorption d'un perméat, est orienté, le long de et/ou perpendiculairement à au moins une position $x_i$ connue, à travers une portion de volume d, de manière guidée à travers la trajectoire de diffusion (11) vers au moins un détecteur (8, 8.1, 8.2).

3. Dispositif selon l'une des revendications précédentes, **caractérisé en ce que**, pour la mesure de la concentration en perméat dans la chambre de mesure et/ou dans l'élément de guidage creux (4), une spectroscopie FTIR, une spectroscopie Cavity-Ring-Down, une spectroscopie photo-acoustique et/ou des techniques spectroscopiques optiques, de préférence une spectroscopie à diode laser, peuvent être utilisées.

4. Dispositif selon l'une des revendications précédentes, **caractérisé en ce qu'**un élément de guidage creux (4) est plus long que la distance entre l'élément de barrière (2) et le puits de perméat (5).

5. Dispositif selon la revendication 1, **caractérisé en ce que**, à l'intérieur de la chambre de mesure (3), de l'élément de guidage creux (4) et du puits de perméat (5), est formée une atmosphère gazeuse avec de l'air, $O_2$, He, Ar, $H_2$ et de préférence $N_2$.

6. Dispositif selon l'une des revendications précédentes, **caractérisé en ce qu'**une chambre de mesure (3) et/ou un élément de guidage creux (4) est/sont conçu(e)(s) de façon à pouvoir être bloqué(e)(s) au niveau d'au moins une position et/ou retiré(e)(s).

7. Dispositif selon l'une des revendications précédentes, **caractérisé en ce que**, entre la chambre de mesure (3) et le puits de perméat (5), sont disposés, de manière parallèle, au moins deux éléments de guidage creux (4), avec des surfaces de sections transversales internes libres $A_G$ différentes, les surfaces de sections transversales internes libres $A_G$ des éléments de guidage creux (4) étant différentes de la surface de section transversale $A_B$.

8. Dispositif selon l'une des revendications précédentes, **caractérisé en ce que**, dans le puits de perméat (5) est/sont présent(s) un/des adsorbeur(s) et/ou absorbeur(s) pour le perméat et/ou du gaz de rinçage sec s'y écoule pour l'évacuation du perméat.

9. Dispositif selon l'une des revendications précédentes, **caractérisé en ce que**, sur une chambre de mesure (3, 3.1) et/ou sur un élément de guidage creux (4) est/sont présent(s) au moins un élément de fenêtre pour l'entrée et/ou la sortie d'un rayon laser.

10. Dispositif selon les revendications précédentes, **caractérisé en ce que** la longueur de la trajectoire de diffusion, la longueur d'une portion de trajectoire de diffusion $\Delta x$, la taille de la surface de section transversale libre $A_G$ et/ou la longueur de l'élément de volume d, traversé par le rayonnement, de la trajectoire de diffusion est/sont réglable(s) pour le réglage de la sensibilité de mesure correspondante ;
la longueur d'une portion de trajectoire de diffusion $\Delta x$ correspondant à la longueur absolue du trajet de la trajectoire de diffusion entre deux positions xi et xii, au niveau desquelles, le long de la trajectoire de diffusion, la modification de la concentration en perméat $\Delta c$ est déterminée.

11. Procédé de détermination du taux de perméation d'un élément de barrière, dans lequel
au moins un gaz à filtrer est introduit de manière continue dans un espace de gaz de test (1) et/ou y est contenu avec une pression partielle constante,
un perméat, filtré à travers une surface de section transversale $A_B$ d'un élément de barrière (2), arrivant, à travers une chambre de mesure (3), le long d'une trajectoire de diffusion (11), à travers au moins un élément de guidage creux (4), avec au moins une surface de section transversale $A_G$ libre différente de la surface de section transversale

$A_B$, sans écoulement uniquement à la suite d'une diffusion à travers la trajectoire de diffusion, vers le puits de perméat, étant diffusé dans un puits de perméat (5) et y étant adsorbé et/ou absorbé et/ou évacué, de façon à ce que, au niveau du puits de perméat (5), une concentration en perméat constante, inférieure à la limite de détection d'un détecteur (8, 8.1, 8.2), soit ajustée,

un rayonnement avec au moins une longueur d'absorption du perméat correspondant, émis par au moins une source de rayonnement (6, 6.1, 6.2), est dirigé de manière guidée à travers la chambre de mesure (3) et/ou à travers au moins un élément de guidage creux (4),

lors d'une mesure d'une seule position, au niveau d'au moins une position connue $x_i$ à travers un élément de volume d de la trajectoire de diffusion (11) et

lors d'une mesure de plusieurs positions, au niveau d'au moins deux positions connues $x_i$, $x_{ii}$, à travers un élément de volume $d_i$, $d_{ii}$ de la trajectoire de diffusion (11),

vers au moins un détecteur optique (8.1, 8.2) et

la variation d'intensité du rayonnement, provoquée par la concentration en perméat est alors détectée et la concentration en perméat $c_i$, $c_{ii}$ en est alors déduite,

la variation de la concentration en perméat $\Delta c$ le long d'une portion de trajectoire de diffusion $\Delta x$, qui correspond à la distance

entre la position connue $x_i$ et le puits de perméat (5) ou

à la distance entre au moins deux positions connues $x_i$, $x_{ii}$ le long de la trajectoire de diffusion (11), étant déterminée, et, à partir du gradient de concentration du perméat $\Delta c / \Delta x$, calculé à partir de $\Delta c$ et de la longueur de la portion de trajectoire de diffusion $\Delta x$, multiplié par le quotient entre la surface de section transversale libre $A_G$ de la portion de diffusion $\Delta x$ et la surface de section transversale perméable $A_B$ de l'élément de barrière (2) $A_G / A_B$, multiplié par la valeur négative de la constante de diffusion D du perméat, le taux de perméation $PR_B$ de l'élément de barrière (2) est calculé.

12. Procédé selon l'une des revendications précédentes, **caractérisé en ce que** la chambre de mesure (3) et/ou l'élément de guidage creux (4) est/sont pré-conditionné(e)(s) avec un rayonnement UV, une désorption thermique ou avec un rinçage par des gaz réactifs.

13. Procédé selon l'une des revendications précédentes, **caractérisé en ce que** le rayonnement est guidé perpendiculairement à ou le long d'un élément de volume d de la trajectoire de diffusion (11).

14. Procédé selon l'une des revendications précédentes, **caractérisé en ce que** la détermination de la concentration en perméat est effectuée à température constante et/ou connue.

Fig. 1a

Fig. 1b

Fig.2a

Fig.2b

Fig. 3a

Fig. 3b

EP 2 667 177 B1

Fig. 4a

Fig. 4b

Fig. 5a

Fig. 5b

EP 2 667 177 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5390539 A
- WO 2008145115 A2
- WO 20120336499 A2
- US 20050092068 A1
- US 20100201983 A1
- US 5581017 A

**In der Beschreibung aufgeführte Nicht-Patentliteratur**

- **BERND SCHIRMER.** Hochaufgelöste Wasserdampf-fdetektion mittels Diodenlaser-Absorptions-spektroskopie. Stuttgart, 2001